# DEMANDE DE BREVET EUROPEEN

(11) **EP 1 895 809 A1**
(43) Date de publication de la demande: **05.03.2008**
(21) Numéro de dépôt: 07354047.8
(22) Date de dépôt: 31.08.2007
(51) Int. Cl.: H04Q 11/04, H04B 3/38

(54) **Système de transmission de signaux numériques par fibre optique avec adaptation automatique au type de modem d'abonné**

(30) Priorité: 31.08.2006 FR 0607657
(71) Demandeur: Ifotec, 38500 Voiron (FR)
(72) Inventeur: Billet, Gilles, 38500 Voiron (FR); Sillans, Christian, 38260 La Frette (FR); Champeau, Stéphane, 38500 Voiron (FR); Masselot, Michaël, 38480 Saint Jean d'Avelane (FR)
(74) Mandataire: Jouvray, Marie-Andrée

(57) **Abrégé**

Le système de transmission à haut débit de signaux numériques comporte un boîtier de central et un boîtier délocalisé (11) auto-adaptatifs connectés par une liaison optique (4). Chaque circuit d'accès (13) du boîtier délocalisé (11) comporte un circuit de détection (18) pour détecter le type du modem d'abonné (M) correspondant et fournir des signaux (Sc) de configuration de la voie correspondante. Dans chaque voie, les circuits d'accès (12, 13) du boîtier central et du boîtier délocalisé sont configurés automatiquement, en mode ADSL, SHDSL ou VDSL, en fonction des signaux de configuration (Sc). Les signaux de configuration peuvent être transmis au boîtier de central par l'intermédiaire de la liaison optique (4).

## Description

### Domaine technique de l'invention

L'invention est relative à un système de transmission à haut débit de signaux numériques entre un boîtier de central, comportant une pluralité de circuits d'accès affectés chacun à une voie prédéterminée, et une pluralité de modems d'abonné, le système comportant un boîtier délocalisé, connecté au boîtier de central par l'intermédiaire d'une connexion optique et comportant des moyens de multiplexage/démultiplexage et une pluralité de circuits d'accès, chacun affecté à l'une desdites voies et connecté à un des modems d'abonné par une ligne téléphonique.

### État de la technique

Pour augmenter la portée des systèmes de transmission numérique à haut débit de signaux, de type DSL ("Digital Subscriber Line" ou ligne d'accès numérique), il est connu, notamment des demandes de brevet EP-A-1176837, WO-A-02/078269 et W02005/072003, de combiner l'utilisation de fibres optiques et de lignes téléphoniques classiques.

Ce déport de signaux DSL, en particulier de signaux ADSL ou SHDSL ("symmetrical high bit rate digital subscriber line"), permet de relier par fibre optique un boîtier de central, connecté à un multiplexeur d'accès DSL (DSLAM ou "digital subscriber line access multiplexer"), à un boîtier délocalisé constituant un sous-répartiteur d'abonnés distants.

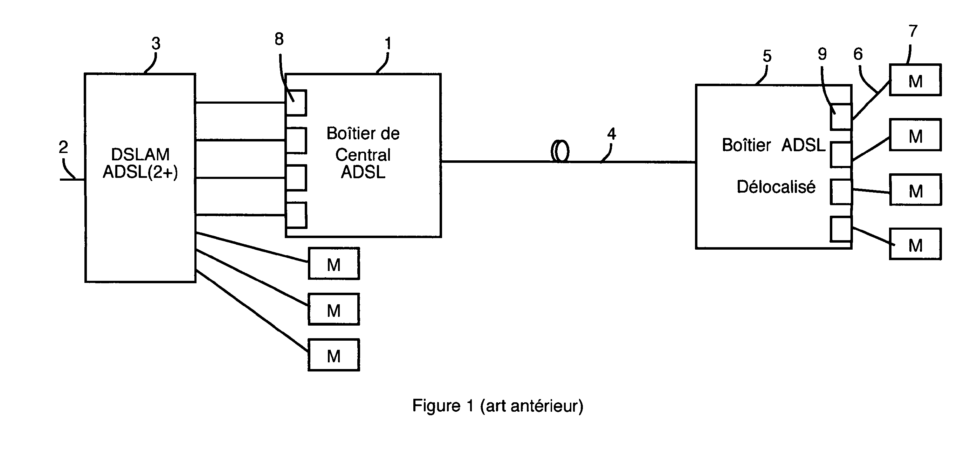

Ainsi, dans le système de transmission ADSL représenté à la figure 1, un boîtier de central 1, adapté à la transmission de signaux ADSL, connecté à une liaison numérique haut débit 2 par un multiplexeur d'accès DSL 3 (DSLAM), est connecté par une liaison par fibre optique 4 à un boîtier délocalisé 5, également adapté à la transmission de signaux ADSL. Le boîtier délocalisé 5 est alors connecté par des lignes téléphoniques classiques 6 à des modems d'abonné 7. Le multiplexeur d'accès DSL 3 transmet classiquement au boîtier de central 1 des signaux haut débit par une pluralité d'entrées/sorties haut débit, connectées à des circuits d'accès 8 correspondants. Le boîtier de central 1 connecte alors le multiplexeur d'accès DSL 3 à la liaison par fibre optique 4 par l'intermédiaire d'une interface de multiplexage/démultiplexage multiplexant les signaux descendants, c'est-à-dire les signaux en direction des abonnés, et démultiplexant les signaux montants, c'est-à-dire les signaux en provenance des abonnés. Dans le boîtier de central 1, un circuit émetteur/récepteur optique est connecté entre l'interface de multiplexage/démultiplexage et la liaison par fibre optique 3. Dans le boîtier délocalisé 5, les signaux descendants transmis par la liaison par fibre optique 4 sont démultiplexés dans une interface de multiplexage/démultiplexage, de manière à fournir des signaux, de type ADSL, aux modems 7 des abonnés distants par l'intermédiaire de circuits d'accès 9 appropriés, constituant une interface de ligne d'abonnés, et des lignes téléphoniques classiques 6. De manière analogue, les signaux montants en provenance des abonnés sont multiplexés dans l'interface de multiplexage/démultiplexage du boîtier délocalisé 5 avant d'être transmis au boîtier de central 1 par la liaison par fibre optique 4. Un circuit émetteur/récepteur optique est connecté dans le boîtier délocalisé 5 entre la liaison par fibre optique 4 et l'interface de multiplexage/démultiplexage.

Dans le document EP-A-1176837, le boîtier de central 1 et le boîtier délocalisé 54 réalisent un multiplexage/démultiplexage temporel (TDM ou "time division multiplex") aussi bien pour les signaux numériques descendants que pour les signaux numériques montants.

Dans le document WO-A-02/078269, un multiplexage/démultiplexage fréquentiel (FDM ou "frequency division multiplex") est utilisé pour les signaux montants, de préférence avec modulation en fréquence ou en amplitude des porteuses, ainsi que pour les signaux descendants.

Le système de transmission de la figure 1 est adapté à la transmission de signaux ADSL, transmission multi-porteuses, dont la bande passante est comprise entre 25kHz et 130kHz dans le sens montant ou sens retour, avec une puissance inférieure à l3dBm, et entre 150KHz et 1,1 MHz dans le sens descendant ou sens direct, avec une puissance pouvant atteindre 2ldBm. Dans le cas d'une transmission de type ADSL2+, la bande de fréquence dans le sens direct doit pouvoir aller jusqu'à 2,2MHz.

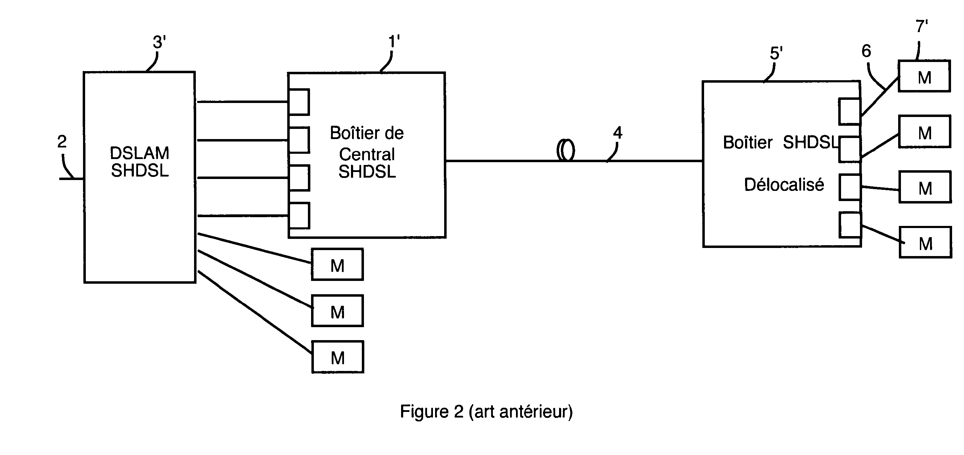

Un système analogue, adapté à la transmission de signaux SHDSL, est illustré à la figure 2. Le DSLAM 3', le boîtier de central 1', le boîtier délocalisé 5' et les modems d'abonné 7' sont alors tous adaptés pour permettre une transmission par modulation d'impulsion dans une bande de fréquence comprise entre quelques kHz et 600kHz aussi bien dans le sens montant que dans le sens descendant, avec une puissance inférieure à 11dBm.

### Objet de l'invention

L'invention a pour but de rendre plus flexible l'utilisation de systèmes de transmission haut débit utilisant le déport par fibre optique.

Ce but est atteint par le fait que :
- chaque circuit d'accès du boîtier délocalisé comporte des moyens de détection, pour détecter le type du modem d'abonné correspondant et fournir des signaux de configuration de la voie correspondante, et des moyens de configuration automatique dudit circuit d'accès en fonction desdits signaux de configuration,
- chaque circuit d'accès du boîtier central comporte des moyens de configuration dudit circuit d'accès en fonction des signaux de configuration de la voie correspondante, transmis au boîtier de central par l'intermédiaire des moyens de multiplexage/démultiplexage du boîtier délocalisé et de la connexion optique.

Selon un mode de réalisation préférentiel, les moyens de détection du type du modem d'abonné comportent des moyens de détection d'une porteuse de 12KHz.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
Les figures 1 et 2 illustrent schématiquement un système de transmission à haut débit selon l'art antérieur, respectivement de type ADSL et SHDSL, avec déport par fibre optique.
La figure 3 illustre schématiquement un système de transmission selon l'invention.
La figure 4 illustre schématiquement un boîtier délocalisé auto-adaptatif d'un système selon la figure 3.
La figure 5 représente un mode particulier de réalisation d'un boîtier de central auto-adaptatif d'un système selon la figure 3.
La figure 6 illustre un exemple d'organigramme, pouvant être utilisé par un circuit de détection d'un boîtier délocalisé auto-adaptatif selon la figure 4.

### Description d'un mode préférentiel de l'invention

Le système de transmission selon l'invention s'adapte automatiquement, dans chaque voie, au type de modem utilisé par l'abonné correspondant. Ceci permet donc de combiner des voies de types différents, dans un même réseau de transmission, chaque abonné utilisant un modem du même type que la voie correspondante, par exemple respectivement ADSL, ADSL2+, SHDSL, VDSL ou VDSL2 (dans ce cas, la bande de fréquence peut aller jusqu'à 30MHz).

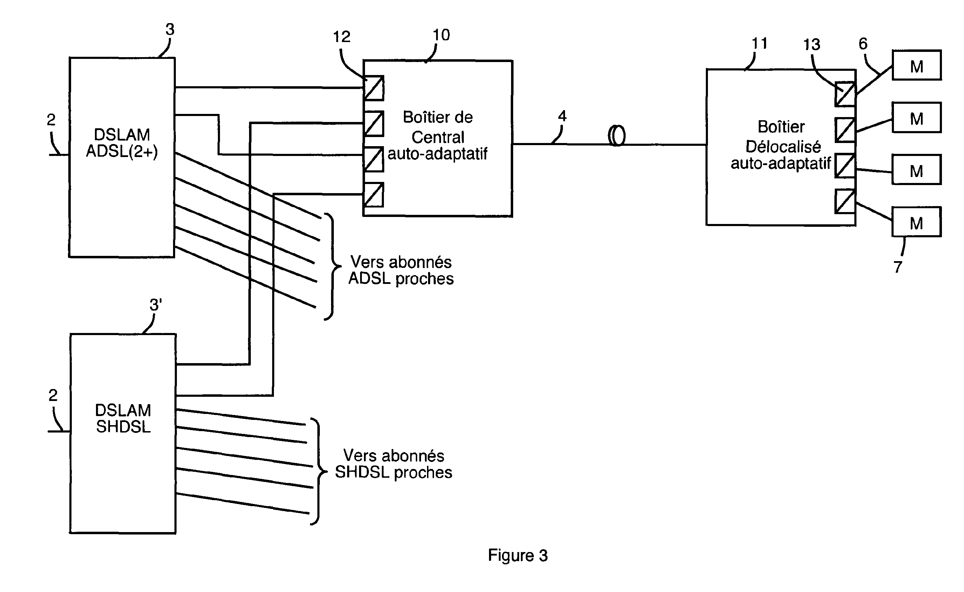

Comme représenté à la figure 3, le système de transmission selon l'invention comporte un boîtier de central auto-adaptatif 10 et un boîtier délocalisé auto-adaptatif 11. Ces boîtiers auto-adaptatifs peuvent éventuellement être utilisés pour remplacer respectivement le boîtier de central (1 ou 1') et le boîtier délocalisé (5 ou 5') d'un réseau existant.

Le boîtier de central auto-adaptatif 10 comporte une pluralité de circuits d'accès 12, qui peuvent être connectés à des liaisons numériques haut débit 2 par l'intermédiaire de plusieurs DSLAM. Dans le mode particulier de réalisation de la figure 3, deux circuits d'accès 12 du circuit de central auto-adaptatif 10, correspondant respectivement à des première et seconde voies du système, sont connectés à un premier multiplexeur d'accès 3, DSLAM de type ADSL2+, tandis que deux autres circuits d'accès 12, correspondant respectivement à des troisième et quatrième voies du système, sont connectés à un second multiplexeur d'accès 3', DSLAM de type SHDSL.

De manière analogue, le boîtier délocalisé auto-adaptatif 11 de la figure 3 comporte deux circuits d'accès 13, associés respectivement aux première et seconde voies du système, et deux autres circuits d'accès 13, associés respectivement aux troisième et quatrième voies du système. Les modems M sont du même type que la voie à laquelle ils sont raccordés.

Sur la figure 3, les sorties du premier multiplexeur d'accès 3 qui ne sont pas connectées au boîtier de central auto-adaptatif 10 sont connectées à des abonnés ADSL proches, c'est-à-dire ne nécessitant pas de déport par fibre optique. De manière analogue, les sorties du second multiplexeur d'accès 3' qui ne sont pas connectées au boîtier de central auto-adaptatif 10 sont connectées à des abonnés SHDSL proches.

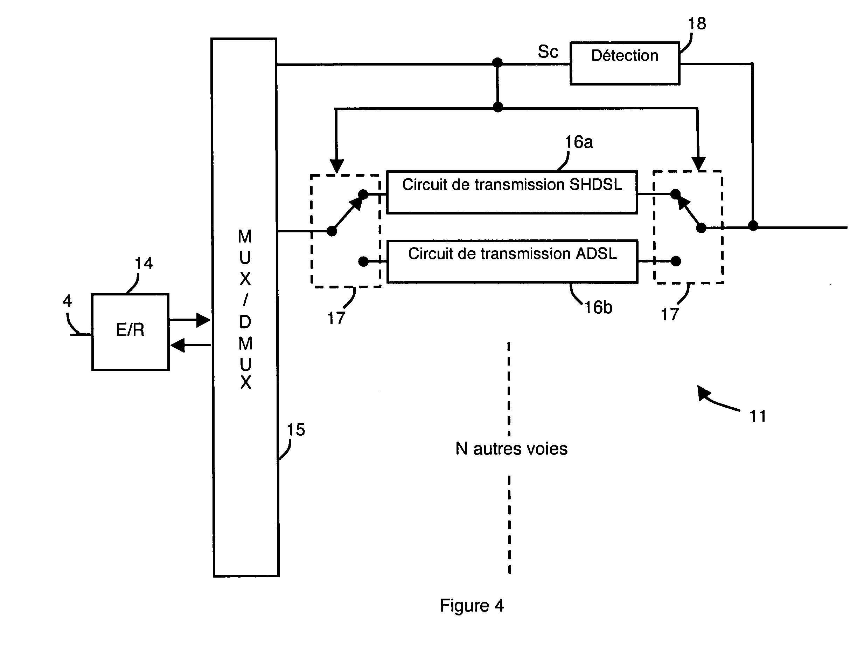

Comme illustré à la figure 4, le boîtier délocalisé auto-adaptatif 11 comporte classiquement un circuit émetteur/récepteur optique 14 (E/R), connecté, d'une part, à la liaison par fibre optique 4 et, d'autre part, par une liaison filaire bidirectionnelle, à un circuit de multiplexage/démultiplexage 15 (MUX/DMUX). Chaque voie comporte, dans le circuit d'accès correspondant disposé entre le circuit de multiplexage/démultiplexage 15 et la ligne téléphonique 6 de l'abonné correspondant, au moins deux circuits de transmission 16 de types différents. Dans l'exemple de la figure 4, un seul circuit d'accès du boîtier délocalisé auto-adaptatif 11 est représenté en détail. II comporte un circuit de transmission SHDSL 16a et un circuit de transmission ADSL 16b. Un commutateur 17 comporte une borne commune connectée à une entrée/sortie du circuit de multiplexage/démultiplexage 15 associée à la première voie et deux bornes de commutation, respectivement connectées aux circuits de transmission 16a et 16b. Un autre commutateur 17 comporte une borne commune connectée, du côté de l'abonné, à la voie correspondante et deux bornes de commutation, respectivement connectées aux circuits de transmission 16a et 16b. Les deux commutateurs 17 d'une même voie sont contrôlés par des signaux Sc de configuration de voie fournis par un circuit de détection 18 associé à la voie, pour configurer automatiquement le circuit d'accès correspondant, c'est-à-dire, pour introduire dans la voie soit le circuit de transmission SHDSL (position illustrée sur la figure 4), soit le circuit de transmission ADSL.

Le circuit de détection 18 est connecté à l'entrée du circuit d'accès du boîtier délocalisé, du côté abonné, pour détecter le type de modem utilisé par l'abonné correspondant et pour fournir les signaux Sc de configuration de voie correspondants. Les signaux Sc de configuration de voie fournis par les circuits de détection 18 de toutes les voies du boîtier délocalisé auto-adaptatif 11 sont transmis, de préférence par l'intermédiaire de la liaison par fibre optique 4, au boîtier de central auto-adaptatif 10. Cette transmission est, de préférence réalisée par l'intermédiaire d'un canal de transmission dédié à la transmission de ces signaux Sc de configuration et de données de supervision et multiplexé avec les signaux numériques à transmettre. Les signaux Sc de configuration sont alors appliqués non seulement à des bornes de commande des commutateurs 17 correspondants, mais également au circuit de multiplexage/démultiplexage 15.

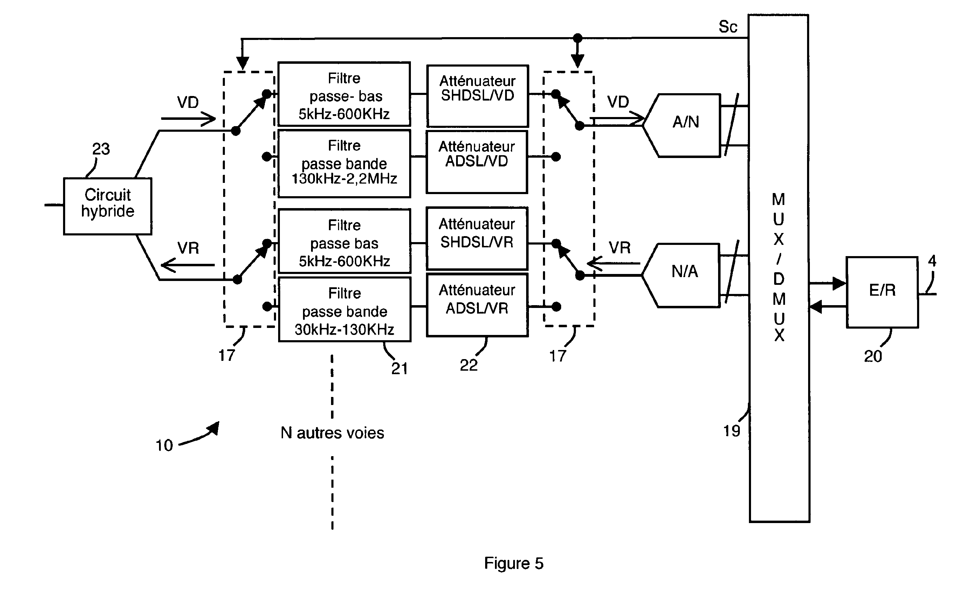

Comme illustré à la figure 5, le boîtier de central auto-adaptatif comporte classiquement, pour chaque voie, un circuit d'accès connecté à un circuit de multiplexage/démultiplexage 19, connecté par l'intermédiaire d'un circuit émetteur/récepteur optique 20 (E/R) à la liaison par fibre optique 4. Comme les circuits d'accès 13 du boîtier délocalisé auto-adaptatif 11, chaque circuit d'accès 12 du boîtier de central délocalisé 10 comporte des circuits de transmission 16 adaptés à différents types de modems d'abonné, introduits sélectivement dans la voie correspondante par l'intermédiaire de commutateurs 17 contrôlés par les signaux Sc de configuration de voie, qui sont transmis au boîtier de central par l'intermédiaire de la liaison par fibre optique 4. Les circuits d'accès du boîtier de central auto-adaptatif sont donc également configurés automatiquement.

Dans le mode de réalisation particulier du boîtier de central auto-adaptatif 10 illustré à la figure 5, chaque voie est subdivisée en deux parties, correspondant respectivement au sens retour VR et au sens direct VD. Chaque circuit de transmission est alors subdivisé en deux parties, adaptées respectivement aux caractéristiques de signaux montants dans le sens retour et aux caractéristiques des signaux descendants dans le sens direct, tandis que chaque commutateur 17 est également subdivisé en deux commutateurs élémentaires, contrôlés simultanément et disposés de manière à commuter les circuits de transmission correspondants dans les deux sens de la voie. Cette subdivision est, de préférence, effectuée de manière analogue dans le boîtier délocalisé auto-adaptatif 11.

Ainsi, le circuit de transmission SHDSL du seul circuit d'accès représenté plus en détail sur la figure 5 comporte, dans le sens direct (VD) de la voie, un filtre passe-bas 21, destiné à réduire la bande passante et les bruits parasites et ayant une bande passante comprise entre 5kHz et 600kHz, en série avec un atténuateur 22 (atténuateur SHDSL/VD), pour adapter le niveau des signaux SHDSL dans le sens direct aux besoins de la transmission SHDSL et, plus particulièrement à la dynamique des convertisseurs analogique-numérique (A/N) du système. Deux commutateurs élémentaires permettent de choisir automatiquement, en fonction des signaux Sc de configuration de voie correspondants, entre cette première partie du circuit de transmission SHDSL et une première partie du circuit de transmission ADSL, constituée par la mise en série d'un filtre passe-bande 21, ayant une bande passante comprise entre 130kHz et 2,2MHz, en série avec un atténuateur 22 (atténuateur ADSL/VD), adapté au niveau des signaux ADSL dans le sens direct. De manière analogue, dans le sens retour (VR) le circuit de transmission SHDSL comporte un filtre passe-bas 21, ayant une bande passante comprise entre 5kHz et 600kHz, en série avec un atténuateur 22 (atténuateur SHDSWR), adapté au niveau des signaux SHDSL dans le sens retour. Deux autres commutateurs élémentaires permettent de choisir automatiquement, en fonction des signaux Sc de configuration de voie correspondants, entre cette seconde partie du circuit de transmission SHDSL et une seconde partie du circuit de transmission ADSL, constituée par la mise en série d'un filtre passe-bande 21, ayant une bande passante comprise entre 30kHz et 130kHz, en série avec un atténuateur 22 (atténuateur ADSL/VR), adapté au niveau des signaux ADSL dans le sens retour. Un circuit hybride 23, classiquement constitué par un circuit d'annulation d'écho, est disposé en amont du circuit d'accès, du côté du DSLAM, pour subdiviser la voie correspondante.

Les commutateurs 17 permettant d'orienter les signaux reçus en provenance d'un DSLAM ou d'un abonné vers un circuit de transmission de type adapté (ADSL, SHDSL, VDSL...) sont, de préférence, constitués par des circuits de commutation statique.

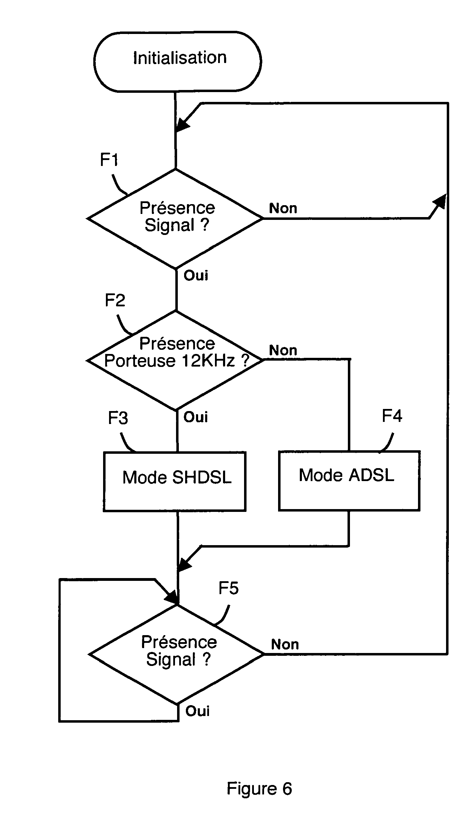

La détection du type de transmission adapté est, comme indiqué ci-dessus, réalisée par le circuit de détection 18, dans chaque voie du boîtier délocalisé adaptatif. Ce circuit de détection détecte en pratique le type de modem d'abonné M connecté au circuit d'accès correspondant du boîtier délocalisé auto-adaptatif 11. Dans un mode de réalisation préférentiel, illustré par l'organigramme de la figure 6, le circuit de détection 18 recherche la présence d'une porteuse de 12kHz dans les signaux en provenance de l'abonné pour différencier des signaux SHDSL de signaux ADSL ou ADSL2+. En effet, dans une transmission de type SHDSL, les normes prescrivent, pour la prise de contact des émetteur/récepteurs de ligne d'abonné numérique, l'envoi d'une porteuse de 12kHz par le modem d'abonné pour initialiser une connexion. Si le circuit de détection détecte la présence de cette porteuse, il fournit un signal de configuration SHDSL. Dans le cas contraire, il fournit des signaux de configuration ADSL ou ADSL2+.

Plus généralement, le circuit de détection 18 peut permettre de différencier plusieurs modes de transmission en procédant à une identification spectrale des signaux reçus du modem d'abonné correspondant. Cette identification spectrale prend en compte les caractéristiques spectrales normalisées des divers modes de transmission considérés (SHDSL, ADSL, ADSL2+, VDSL, VDSL2...).

Dans l'exemple de la figure 6, le circuit de détection vérifie d'abord (étape F1 ) si un signal en provenance du modem d'abonné associé est présent. Ceci peut, par exemple, être réalisé par détection d'amplitude. Dans un mode de réalisation particulier, si un signal d'amplitude supérieure ou égale à 4V est détecté pendant une période de quelques millisecondes, un signal est considéré comme présent. Dans ce cas (sortie Oui de F1), le circuit de détection 18 analyse alors les signaux reçus, par exemple pour détecter (étape F2) la présence d'une porteuse de 12kHz. Si cette présence est détectée (sortie Oui de F2), le circuit de détection 18 fournit des signaux de configuration SHDSL (étape F3 : mode SHDSL). Sinon (sortie Non de F2), il fournit des signaux de configuration ADSL (étape F4 : mode ADSL). Après les étapes F3 et F4, le circuit de détection 18 continue à surveiller la présence d'un signal (étape F5). Tant qu'un signal est détecté (sortie Oui de F5), il se reboucle sur l'étape F5 et la configuration n'est pas modifiée. Par contre, lorsque l'activité cesse sur la voie correspondante, c'est-à-dire lorsque la présence d'un signal n'est plus détectée (sortie Non de F5), le circuit de détection se reboucle sur l'entrée de l'étape F1. De manière analogue, si aucun signal n'est détecté pendant l'étape F1 (sortie Non de F1), le circuit de détection 18 se reboucle sur l'entrée de cette étape.

La configuration des circuits d'accès des boîtiers auto-adaptatif peut, de plus, être contrôlée manuellement par un opérateur par l'intermédiaire d'une ligne d'accès numérique de supervision. Une telle ligne de supervision, classiquement prévue dans les systèmes de transmission haut débit, fournit alors des signaux de configuration additionnels des circuits d'accès, plus particulièrement des signaux de contrôle des commutateurs 17 dans les modes de réalisation décrits ci-dessus. Les signaux de configuration fournis par la ligne de supervision peuvent, dans un mode de fonctionnement forcé, avoir priorité sur les signaux de configuration fournis par les circuits de détection 18.

Les filtres 21 et atténuateurs 22 peuvent éventuellement être réalisés numériquement, aussi bien dans le boîtier de central que dans le boîtier délocalisé. Dans ce cas, les convertisseurs analogique-numérique (A/N et numérique-analogique N/A, illustrés uniquement sur la figure 4 entre les commutateurs 17 et le circuit de multiplexage/démultiplexage 19) sont alors placés en amont des circuits de transmission dans le sens descendant dans le boîtier de central et dans le sens montant dans le boîtier délocalisé. Les circuits de détection 18 (pour le boîtier délocalisé), les circuits de transmission 16 (filtres 21 et atténuateurs 22) et les commutateurs 17 sont alors, de préférence, implantés dans un circuit logique programmable, par exemple de type CPLD ("complex programmable logic device" ou circuit logique programmable complexe) ou FGPA ("field programmable gate array" ou réseau de portes programmables).

L'utilisation de filtres numériques permet d'utiliser un seul circuit de transmission, comportant au moins un filtre numérique, par circuit d'accès et de supprimer les commutateurs 17. Dans ce cas, les signaux de configuration Sc sont appliqués directement à une entrée de contrôle du circuit d'accès pour modifier les caractéristiques des filtres et/ou atténuateurs numériques correspondants. Les caractéristiques des filtres et/ou atténuateurs numériques peuvent ainsi être adaptées automatiquement au type de modem d'abonné sous le contrôle des signaux de configuration.

Les caractéristiques des filtres et/ou atténuateurs numériques ainsi réalisés peuvent également être modifiées par un opérateur par l'intermédiaire des signaux de configuration additionnels fournis par la ligne de supervision du système. Les signaux de configuration additionnels peuvent soit remplacer les signaux de configuration fournis par les circuits de détection 18, soit, de préférence, les compléter pour modifier certaines caractéristiques des circuits de transmission des circuits d'accès. L'opérateur peut ainsi, par exemple, notamment dans la partie basse de la bande de fréquences, atténuer certaines porteuses, qui risqueraient, dans certains cas, de perturber, par couplage électromagnétique dans un câble d'accès, des lignes téléphoniques voisines de la voie considérée qui ne transitent pas par le système et dont le niveau de signal est très atténué.

De manière analogue, l'opérateur peut reconfigurer les filtres numériques pour prendre en compte les spécificités d'occupation spectrale des signaux des voies montantes et descendantes, par exemple dans le cas de signaux VDSL2, dans lesquels les porteuses occupent une bande de fréquences jusqu'à 30 MHz avec un entrelacement des bandes de fréquences des porteuses des voies montantes et descendantes.

## Revendications

1. Système de transmission à haut débit de signaux numériques entre un boîtier de central (10), comportant une pluralité de circuits d'accès (12) affectés chacun à une voie prédéterminée, et une pluralité de modems d'abonné (M), le système comportant un boîtier délocalisé (11), connecté au boîtier de central par l'intermédiaire d'une connexion optique (4) et comportant des moyens de multiplexage/démultiplexage (15) et une pluralité de circuits d'accès (13), chacun affecté à l'une desdites voies et connecté à un des modems d'abonné par une ligne téléphonique (6), système
**caractérisé en ce que**
- chaque circuit d'accès (13) du boîtier délocalisé (11) comporte des moyens de détection (18), pour détecter le type du modem d'abonné correspondant et fournir des signaux (Sc) de configuration de la voie correspondante, et des moyens (16, 17) de configuration automatique dudit circuit d'accès en fonction desdits signaux de configuration (Sc),
- chaque circuit d'accès (12) du boîtier central (10) comporte des moyens (17, 21, 22) de configuration dudit circuit d'accès en fonction des signaux (Sc) de configuration de la voie correspondante, transmis au boîtier de central (10) par l'intermédiaire des moyens de multiplexage/démultiplexage (15) du boîtier délocalisé (11) et de la connexion optique (4).

2. Système selon la revendication 1, **caractérisé en ce que** les moyens (18) de détection du type du modem d'abonné comportent des moyens de détection d'une porteuse de 12KHz.

3. Système selon la revendication 1, **caractérisé en ce que** les moyens (18) de détection du type du modem d'abonné comportent des moyens d'identification spectrale.

4. Système selon l'une quelconque des revendications 1 à 3, **caractérisé en ce que** les moyens de configuration d'un circuit d'accès comportent des moyens (17) de commutation, contrôlés par les signaux (Sc) de configuration de voies, entre des circuits de transmission (16) adaptés à différents types de modems d'abonné.

5. Système selon la revendication 4, **caractérisé en ce que** les circuits de transmission (16b) adaptés à un modem d'abonné de type ADSL comportent au moins un filtre passe-bande (21) ayant une bande passante comprise entre 130kHz et 2,2MHz dans le sens descendant et au moins un filtre passe-bande (21) ayant une bande passante comprise entre 30kHz et 130kHz dans le sens montant.

6. Système selon l'une des revendications 4 et 5, **caractérisé en ce que** les circuits de transmission (16a) adaptés à un modem d'abonné de type SHDSL comportent au moins deux filtre passe-bas (21) ayant chacun une bande passante comprise entre 5kHz et 600kHz, respectivement dans le sens descendant et dans le sens montant.

7. Système selon l'une des revendications 5 et 6, **caractérisé en ce que** chaque circuit de transmission (16) comporte un atténuateur (22) en série avec le filtre correspondant.

8. Système selon l'une quelconque des revendications 1 à 3, **caractérisé en ce que** chaque circuit d'accès comporte au moins un filtre numérique ayant des caractéristiques adaptées sous le contrôle des signaux de configuration appliqués à une entrée de contrôle du circuit d'accès.

9. Système selon l'une quelconque des revendications 1 à 8, **caractérisé en ce qu'**il comporte une ligne de supervision fournissant des signaux de configuration additionnels.

10. Système selon l'une quelconque des revendications 1 à 7, **caractérisé en ce que** les modems d'abonnés (M) sont de type ADSL, SHDSL ou VDSL.
